# EUROPÄISCHE PATENTSCHRIFT

(11) **EP 3 909 865 B1**
(45) Veröffentlichungstag und Bekanntmachung des Hinweises auf die Patenterteilung: **29.01.2025**
(21) Anmeldenummer: 21173096.5
(22) Anmeldetag: 10.05.2021
(51) Int. Cl.: B64G 1/64

(54) **VORRICHTUNG ZUM ZURÜCKHALTEN UND ZUM KOMMANDIERTEN FREIGEBEN EINES IN FREIGABERICHTUNG FREIZUGEBENDEN ELEMENTES**
DEVICE FOR RETAINING AND COMMANDED RELEASE OF AN ELEMENT TO BE RELEASED IN THE RELEASE DIRECTION
DISPOSITIF DE RETENUE ET DE LIBÉRATION COMMANDÉE D'UN ÉLÉMENT À LIBÉRER DANS LE SENS DE LIBÉRATION

(30) Priorität: 14.05.2020 AT 504262020
(43) Veröffentlichungstag der Anmeldung: 17.11.2021
(73) Patentinhaber: Space-Lock GmbH, 2345 Brunn am Gebirge (AT)
(72) Erfinder: Günther, Florian, 2340 Mödling (AT); Uhl, Andreas, 1230 Wien (AT)
(74) Vertreter: Hübscher & Partner Patentanwälte GmbH

(56) Entgegenhaltungen:
- CN-A- 108 327 929
- CN-A- 110 949 693
- GB-A- 2 475 938
- US-A1- 2003 076 215
- US-B1- 6 352 397

## Beschreibung

Die Erfindung bezieht sich auf eine Vorrichtung zum Zurückhalten und zum kommandierten Freigeben eines in Freigaberichtung freizugebenden Elementes mit wenigstens zwei zwischen einer Rückhaltestellung und einer Freigabestellung verlagerbaren Rückhalteelementen, wobei die Rückhalteelemente von einem diese umwickelnden Spannelement in Rückhaltestellung gehalten werden, wobei ein mit einer Kraft beaufschlagtes Separationselement in Freigaberichtung gegen die Rückhalteelemente, zum aktiven Auseinandertreiben der Rückhalteelemente quer zur Freigaberichtung, angestellt ist.

Aus der US8568053B2 ist eine Vorrichtung zum Zurückhalten und zum kommandierten Freigeben eines in Freigaberichtung freizugebenden Elementes bekannt. Die Vorrichtung weist hierzu Rückhalteelemente auf, welche zwischen einer Rückhaltestellung und einer Freigabestellung verlagerbar sind. In Rückhaltestellung umgreifen die Rückhalteelemente ein freizugebendes Element abschnittsweie, sodass eine Bewegung des freizugebenden Elementes in Freigaberichtung verhindert wird. Die Rückhalteelemente werden dabei von einem gespannten, die Rückhalteelemente umschlingenden bzw. umgreifenden Spannelement in Rückhaltestellung gehalten. Die Spannung des Spannelementes erfolgt dadurch, dass dieses zunächst um die Rückhalteelemente gewickelt wird und dann ein Endabschnitt des Spannelementes mit einem Schmelzdraht verbunden und so unter Spannung gehalten wird. Wird nun der Schmelzdraht mit Strom beaufschlagt, schmilzt dieser durch, wodurch sich das gespannte Spannelement, beispielsweise eine Wicklung, lockert und dadurch die Rückhalteelemente nicht mehr in ihrer Rückhaltestellung fixieren kann. Durch Aufbringen einer Zugkraft in Freigaberichtung über das freizugebende Element werden die Rückhalteelemente quer zur Freigaberichtung in deren Freigabestellung verlagert, sodass das freizugebende Element in Freigaberichtung freigegeben wird. Nachteilig daran ist allerdings, dass die Rückhalteelemente nur bei ausreichend hoher, durch das freizugebende Element eingebrachter Zugkraft ordnungsgemäß in deren Freigabestellung verlagert werden können, sodass die Rückhalteelemente je nach zu erwartender Last des freizugebenden Elementes unterschiedlich ausgestaltet werden müssen. Darüber hinaus besteht bei der aus dem Stand der Technik bekannten Vorrichtung das inhärente Risiko, dass die Rückhalteelemente auch in deren Freigabestellung durch eine ungünstige Verlagerung den Freigabewegweg für das freizugebende Element in Freigaberichtung blockieren können.

Aus US5282709A und CN 109131951 ist jeweils eine Vorrichtung gemäß dem Oberbegriff bekannt. Nachteilig daran ist, dass das Separationselement in den Freigabeweg zwischen die Rückhalteelemente eindringen kann und somit ein ordnungsgemäßes Freigeben des freizugebenden Elementes beeinträchtigt werden kann.

US3520223A zeigt ebenfalls eine Vorrichtung gemäß dem Oberbegriff. Für ein Freigeben des freizugebenden Elements müssen die Rückhalteelemente in dafür vorgesehene Ausnehmungen des Gehäuses verlagert werden, was zu einem Verklemmen der Rückhalteelemente führen kann und damit zu einer nicht ordnungsgemäßen Freigabe.

Aus GB2475938A ist eine Vorrichtung zum Zurückhalten und zum kommandierten Freigeben eines in Freigaberichtung freizugebenden Elementes mit zwei zwischen einer Rückhaltestellung und einer Freigabestellung verlagerbaren Rückhalteelementen vorbekannt. Die Rückhalteelemente sind durch Druckfedern und eine Hebelvorrichtung in der Rückhaltestellung gehalten. Gegen das freizugebende Element ist ein Separationselement angestellt. Aufgrund des verhältnismäßig komplexen Zusammenwirkens zwischen den Rückhalteelementen und der Hebelvorrichtung besteht die Gefahr eines Verklemmens der Rückhalteelemente.

CN110949693A offenbart auch eine Vorrichtung zum Zurückhalten und zum kommandierten Freigeben eines in Freigaberichtung freizugebenden Elementes mit zwei zwischen einer Rückhaltestellung und einer Freigabestellung verlagerbaren Rückhalteelementen. Der Wechsel zwischen Rückhaltestellung und Freigabestellung der Rückhalteelemente erfolgt über in Freigaberichtung verlagerbare weitere Rückhalteelemente, wodurch sich aufgrund der verhältnismäßig aufwendigen Mechanik ein fehleranfälliger Freigabemechanismus ergibt.

Der Erfindung liegt somit die Aufgabe zugrunde, eine Vorrichtung der eingangs erwähnten Art zu schaffen, die unabhängig von der durch das freizugebende Element eingebrachten Last ein zuverlässiges Freigeben des freizugebenden Elementes ermöglicht.

Die Erfindung löst die gestellte Aufgabe dadurch, dass das Separationselement auf einem koaxial zur Freigaberichtung gelagerten Führungsdorn verschiebbar angeordnet ist und dass der Führungsdorn eine Anschlagfläche zum Zurückhalten des Separationselementes in Freigabestellung aufweist. Zufolge dieser Maßnahme erfolgt eine Verlagerung der Rückhalteelemente in Freigabestellung, also ein Auseinandertreiben der Rückhalteelemente quer zur Freigaberichtung, aktiv durch die vom Separationselement erzeugte Krafteinwirkung und somit unabhängig von der vom freizugebenden Element auf die Rückhalteelemente einwirkenden Zugkraft. Die vom Separationselement ausgeübte Kraft kann dabei von einer Feder, beispielsweise einer Druckfeder, die in Rückhaltestellung unter Vorspannung steht und permanent eine Kraft in Freigaberichtung auf die Rückhalteelemente ausübt, erzeugt werden. Auch eine Beaufschlagung über sich abstoßende Magnete ist denkbar. Dadurch, dass das Separationselement auf die Rückhalteelemente einwirkt und nicht auf das freizugebende Element selbst, wird die translatorische Bewegung des freizugebenden Elements nicht auf negative Weise beeinflusst. Weiters verhindert das Separationselement ein Zurückfallen der Rückhalteelemente in den freizuhaltenden Freigabeweg und somit eine unbeabsichtigte Blockierung des freizugebenden Elements durch die Rückhalteelemente nach deren Verlagerung in Freigabestellung. Um ein aktives Auseinandertreiben der Rückhalteelemente zu erleichtern, ist das mit einer Kraft beaufschlagte, beispielsweise federbelastete Separationselement gegen schräge, beispielsweise kegelsegmentförmige Gleitflächen der Rückhalteelemente angestellt. In Rückhaltestellung sind die Rückhalteelemente von einem Spannelement, beispielsweise einer Wicklung aus einem Band oder einem Draht, umwickelt, wodurch die Rückhalteelemente entgegen der vom Separationselement einwirkenden Kraft in Rückhaltestellung gehalten werden. Es muss wohl nicht weiter erwähnt werden, dass in Rückhaltestellung die vom gespannten Spannelement auf die Rückhalteelemente einwirkende Kraft gleich oder größer der vom Separationselement auf die Rückhalteelemente einwirkenden Kraft plus gegebenenfalls einer über das freizugebende Element extern aufbringbaren Vorspannkraft sein muss, um ein unbeabsichtigtes Auslösen zu verhindern. Wird nun die Wicklung gelockert, so unterschreitet die Kraft des von dem Spannelement erzeugten Reibschlusses die vom Separationselement auf die Rückhalteelemente einwirkende Kraft. Die Vorspannung eines federgestützten oder mit einer magnetischen Abstoßung beaufschlagten Separationselementes reicht daher aus, um die Rückhaltelemente auseinander zu treiben und somit in Freigabelage zu verlagern, wodurch das freizugebende Element in Freigaberichtung freigegeben wird. Besonders günstige Verhältnisse hinsichtlich einer einfachen Verlagerung ergeben sich, wenn die Wicklung eine Eigenspannung aufweist, sodass sich nach Lockerung der Wicklung deren Durchmesser aufgrund der Eigenspannung erweitert, wodurch kein Reibschluss und somit keine Kraft auf die Rückhalteelemente einwirken können. Das Spannen und Lösen des Spannelementes kann dabei über aus dem Stand der Technik bekannte Auslösevorrichtungen beispielsweise Hebel, einziehbare Dorne, oder Schmelzdrähte erfolgen.

Um eine exakte und reproduzierbare Krafteinwirkung des Separationselementes auf die Rückhalteelemente zu ermöglichen, wird vorgeschlagen, dass das Separationselement auf einem koaxial zur Freigaberichtung gelagerten Führungsdorn verschiebbar angeordnet ist. Dadurch kann dem Separationselement eine geführte Richtung vorgegeben werden, sodass dieses an allen Rückhalteelementen die gleiche Krafteinwirkung erzeugt. Somit gleichen einander der Angriffspunkt und der Betrag der vom Separationselement auf die Rückhalteelemente einwirkenden Kräfte an jedem Rückhalteelement.

Damit ein durch das Separationselement bedingtes Blockieren des freizugebenden Elementes verhindert werden kann, weist der Führungsdorn eine Anschlagfläche zum Zurückhalten des Separationselementes in Freigabestellung auf. Die Anschlagflächen begrenzen das Separationselement in Freigaberichtung, wodurch dieses nicht in den Freigabeweg eindringen kann. Die Anschlagflächen können vorzugsweise nachgiebig ausgestaltet sein, sodass etwaige stoßartige Belastungen durch das Separationselement abgefedert werden können.

Um eine Montage des freizugebenden Elementes und etwaige Konstruktionsmaßnahmen am freizugebenden Element in Rückhaltestellung zu erleichtern, kann der Führungsdorn eine topfförmige Aufnahme zum wenigstens abschnittsweisen Umgreifen der Kopfseite des freizugebenden Elementes umfassen. Während des Einbauens des freizugebenden Elementes dient die topfförmige Aufnahme als Zentriervorrichtung für das freizugebende Element. Grundsätzlich sind die topfförmige Aufnahme und das freizugebende Element, nämlich die Kopfseite des freizugebenden Elements, im Folgenden auch Freigabeelementkopf genannt, in Rückhaltestellung voneinander beabstandet. Sollen nun etwaige Konstruktionsmaßnahmen am freizugebenden Element vorgenommen werden, wie beispielsweise das Eindrehen eines Gewindes zum Verbinden des freizugebenden Elementes mit einer anderen Vorrichtung, so kann das freizugebende Element gegen die topfförmige Aufnahme gedrückt werden. Dadurch wird ein Reibschluss erzeugt, wodurch das freizugebende Element mit einem Torsionsmoment beaufschlagt werden kann, wie dies beispielsweise beim Eindrehen eines Gewindes in das freizugebende Element der Fall ist. Die Aufnahme kann beispielsweise auch als Vierkant-, oder Mehrkantprofil ausgebildet sein, wodurch ein besonders großes Torsionsmoment auf das freizugebende Element aufgebracht werden kann, wenn dessen Freigabeelementkopf korrespondierend ausgebildet ist.

Um ein besonders sicheres Abschirmen gegen etwaige lose Komponenten der Vorrichtung und damit eine unbeabsichtigte Blockierung des freizugebenden Elementes zu verhindern, wird vorgeschlagen, dass das Separationselement eine Separationskappe ist, welche das freizugebende Element in Rückhaltestellung abschnittsweise berührungslos umhüllt. Die Separationskappe wirkt dabei nicht nur als Separationselement, das die Rückhalteelemente aus deren Rückhaltestellung in die Freigabestellung verlagert, also diese quer zur Freigaberichtung auseinandertreibt, sondern auch als Abschirmung des Freigabewegs, also jenes freizuhaltenden Weges, über den das freizugebende Element die Vorrichtung verlässt. Durch die erfindungsgemäße Ausgestaltung der Separationskappe umhüllt diese das freizugebende Element und den Freigabeweg wenigstens abschnittsweise, wodurch das Eindringen von etwaigen losen Komponenten der Vorrichtung in den Freigabeweg verhindert werden kann. Darüber kann die Separationskappe bei einer Abweichung des freizugebenden Elementes von der Freigaberichtung als Führung für das freizugebende Element beim Verlassen der Vorrichtung dienen. Im Regelfall soll jedoch kein Kontakt zwischen der Separationskappe und dem freizugebenden Element entstehen.

Damit unabhängig von den Materialeigenschaften und von den Stehzeiten der Vorrichtung eine fehlerlose Freigabe des freizugebenden Elementes ermöglicht wird, kann der Randabschnitt der Separationskappe eine angefaste Fläche aufweisen. Dadurch kann eine Kantenpressung zwischen den Rückhalteelementen und dem gegen die Rückhalteelemente angestellten Randabschnitt der Separationskappe auch bei Materialien geringer Härte vermieden werden. Bevorzugt sind die angefasten Flächen des Randabschnittes der Separationskappe zu den Gleitflächen der Rückhalteelemente korrespondierend ausgebildet, wodurch das Auseinandertreiben der Rückhalteelemente weiter erleichtert wird.

Um eine Wiederverwendung der erfindungsgemäßen Vorrichtung zu ermöglichen und gleichzeitig eine Langlebigkeit der selbigen zu garantieren, empfiehlt es sich in einer besonders robusten Ausführungsform der erfindungsgemäßen Vorrichtung, dass die Rückhalteelemente, das Spannelement und das Separationselement von einem Gehäuse umhüllt sind. Wird die Vorrichtung beispielsweise in der Schwerelosigkeit eingesetzt, so kann ein Verlust der losen Komponenten nach der Freigabe des freizugebenden Elementes verhindert werden. Gleichzeit bildet das Gehäuse eine einfach zu befestigende und kompakte Baueinheit. Das Gehäuse wirkt darüber hinaus als Schutz für die darin befindlichen Komponenten der Vorrichtung. Um eine ordnungsgemäße Lockerung des Spannelements zu ermöglichen, kann der Durchmesser des Gehäuses größer als der Durchmesser des gelockerten Spannelementes sein.

Damit ein unbeabsichtigtes Auslösen der Vorrichtung durch von außen einwirkende Kräfte verhindert werden kann, wird vorgeschlagen, dass ein Endabschnitt des Spannelementes lösbar mit einer im Gehäuse angeordneten Auslösevorrichtung verbunden ist. Zufolge dieser Maßnahme kann also auch die Auslösevorrichtung vom Gehäuse geschützt werden und als kompakte Baueinheit verbaut werden. Ein Endabschnitt des Spannelementes kann mit einem Rückhalteelement verbunden sein, von wo das Spannelement die Rückhaltelemente umfangseitig umwickelt und anschließend mit ihrem anderen Endabschnitt lösbar mit der Auslösevorrichtung, beispielsweise ein Hebel oder ein einziehbarer Dorn, verbunden wird, wodurch das Spannelement um die Rückhalteelemente gespannt wird. Wird die Auslösevorrichtung ferngesteuert betätigt, löst sich der Endabschnitt von dieser, wodurch sich das Spannelement lockert und eine Verlagerung der Rückhalteelemente in Freigabestellung ermöglicht wird.

Besonders günstige konstruktive Bedingungen ergeben sich, wenn der Führungsdorn fest mit der Deckseite des Gehäuses verbunden ist, wobei das federbelastete Separationselement verschiebbar am Führungsdorn zwischen dessen Anschlagfläche und der Deckseite des Gehäuses angeordnet ist.

Die erfindungsgemäße Vorrichtung kann vorzugsweise in Kombination mit einem erfindungsgemäßen freizugebenden Element eingesetzt werden, wobei dieses einen gegenüber einem Freigabeelementhals erweiterten Freigabeelementkopf aufweist. Damit ein fehlerloses Freigeben begünstigt wird, weist der von den Rückhalteelementen gegriffene Abschnitt des Freigabeelementkopfes einen Gleitfilm auf. Der Gleitfilm ist demnach eine Beschichtung, die die Reibung zwischen dem freizugebenden Element und den Rückhalteelementen, insbesondere deren Gleitflächen, verringert und kann beispielsweise ein vakuumtauglicher Trockenschmierfilm, wie MoS₂ sein. Um verschiedene Komponenten kommandiert freigeben zu können, kann das freizugebende Element ein Innengewinde für eine Verbindungsschraube aufweisen. Über die Verbindungsschraube können diverse Vorrichtungen an das freizugebende Element gekoppelt werden. Zur Erhöhung des Reibschlusses zwischen der topfförmigen Aufnahme des Führungsdornes und der Deckseite des Rückhalteelementkopfes, kann dieser deckseitig eine Reibfläche aufweisen oder mit einem Reibmittel beaufschlagt sein.

In der Zeichnung ist der Erfindungsgegenstand beispielsweise dargestellt. Es zeigen
- Fig. 1: einen schematischen Schnitt durch eine erfindungsgemäße Vorrichtung in Rückhaltestellung und
- Fig. 2: einen schematischen Schnitt durch eine erfindungsgemäße Vorrichtung in Freigabestellung.

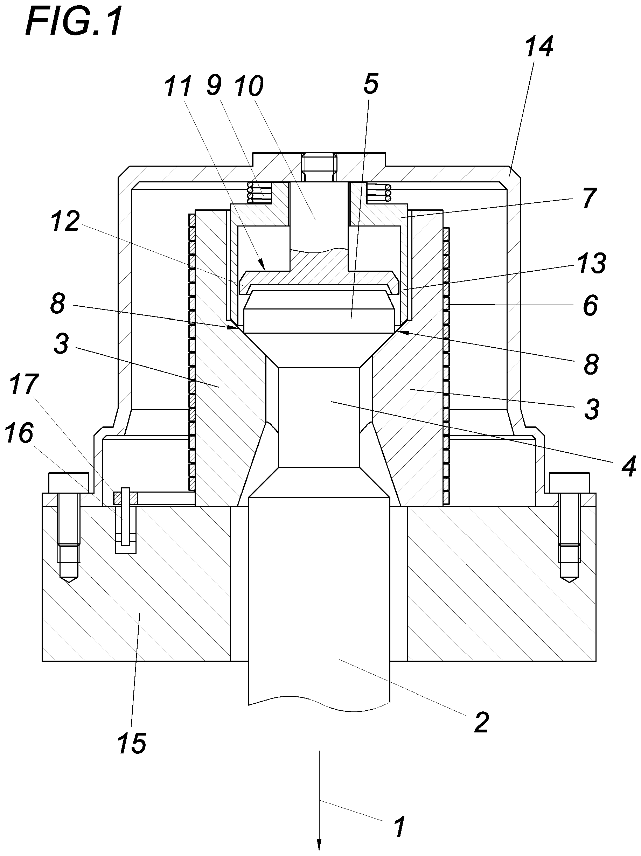

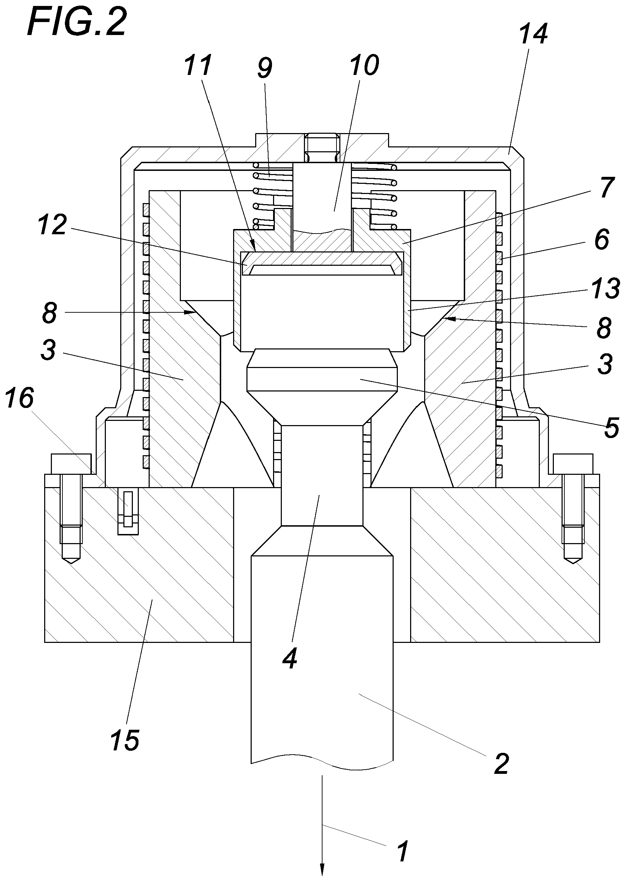

Eine erfindungsgemäße Vorrichtung zum Zurückhalten und zum kommandierten Freigeben eines in Freigaberichtung 1 freizugebenden Elementes 2 weist wenigstens zwei Rückhalteelemente 3 auf. Die Rückhalteelemente 3 sind zwischen einer in Fig. 1 dargestellten Rückhaltestellung und einer in Fig. 2 dargestellten Freigabestellung verlagerbar. In Rückhaltestellung umgreifen die Rückhalteelemente 3 das freizugebende Element 2, nämlich den gegenüber dem Freigabeelementhals 4 erweiterten Freigabeelementkopf 5 wenigstens abschnittsweise, sodass eine Bewegung des freizugebenden Elementes 2 in Freigaberichtung 1 verhindert wird. Dies kann beispielsweise durch eine formschlüssige Verbindung zwischen den Rückhalteelementen 3 und dem freizugebenden Element 2 erzielt werden. In Freigabestellung (Fig. 2) sind die Rückhalteelemente 3 so weit voneinander beabstandet, dass der Freigabeelementkopf 5 nicht mehr umgriffen und daher eine Bewegung des freizugebenden Elementes 2 in Freigaberichtung 1 ermöglicht wird. Damit die Rückhalteelemente 3 in ihrer Rückhaltestellung fixiert werden können, umschlingt ein gespanntes Spannelement 6 die Rückhalteelemente 3 umfangseitig und verhindert so ein Auseinandertreiben dieser quer zur Freigaberichtung 1. Erst nach einer kommandierten Lockerung des Spannelementes 6 können die Rückhalteelemente 3 in Freigabelage verlagert werden. Die Verlagerung geschieht erfindungsgemäß durch ein mit einer Kraft beaufschlagtes Separationselement 7, das in Freigaberichtung 1 gegen die Rückhalteelemente 3, bevorzugt gegen Gleitflächen 8 der Rückhalteelemente 3, angestellt ist. Die Verlagerung der Rückhalteelemente 3 von der Rückhaltestellung in die Freigabestellung erfolgt demnach aktiv durch das Separationselement 7 und nicht ausschließlich durch eine über das freizugebende Element 2 einwirkende Zugkraft. Das Separationselement 7 ist gemäß dem Ausführungsbeispiel durch eine Druckfeder 9 mit einer Kraft beaufschlagt. Die Rückhalteelemente 3 können beispielsweise aus hochfestem, korrosionsbeständigen Stahl 1.4545 gefertigt und mit Titan-Nitrid beschichtet sein. Das freizugebende Element 2 kann ein Innengewinde aufweisen, in das etwaige Verbindungsschrauben eingedreht werden können. Für ein erleichtertes Gleiten des Freigabeelementkopfes 5 beim Freigeben entlang der Gleitflächen 8 ist dieser abschnittsweise, vorzugsweise an dem die Gleitflächen 8 der Rückhalteelemente 3 berührenden Abschnitt, mit einem Gleitfilm beschichtet. Das Spannelement 6 kann eine aus Federstahl 1.4310 oder 1.4568 gefertigte, schraubenförmige Bandwicklung sein, die eine Eigenspannung aufweist.

Aufgrund dieser Eigenspannung erweitert sich der Durchmesser der Bandwicklung, wenn diese nicht mehr gespannt ist, wodurch eine Verlagerung der Rückhalteelemente 3 in Freigabestellung erst ermöglicht wird. Die Druckfeder 9 besteht aus korrosionsbeständigem Federstahl, beispielsweise 1.4310 oder 1.4568 und kann als Multiwellenfeder ausgeführt sein, um eine Redundanz im Falle eines Bruches eines Teils der Druckfeder 9 zu gewährleisten.

Das Separationselement 7 kann auf einem koaxial zur Freigaberichtung 1 gelagerten Führungsdorn 10 verschiebbar angeordnet sein. Dadurch wird ein geführter und reproduzierbarer Krafteintrag durch das Separationselement 7 ermöglicht. Der Führungsdorn 10 kann aus PEEK gefertigt sein.

Der Führungsdorn 10 kann eine Anschlagfläche 11 für das Separationselement 7 ausbilden, wodurch die Bewegung des Separationselementes 7 begrenzt wird und eine Blockierung des Freigabewegs verhindert werden kann. Während also das Separationselement 7 eine Blockierung des Freigabewegs durch beispielsweise ein Zurückkippen der Rückhalteelemente 3 verhindert, verhindert die Anschlagfläche 11 eine Blockierung, verursacht durch das Separationselement 7 selbst. Die Anschlagflächen sind vorzugsweise nachgiebig ausgestaltet, sodass etwaige stoßartige Belastungen durch das Separationselement 7 abgefedert werden können.

Zum Zentrieren des freizugebenden Elementes 2 während der Montage kann der Führungsdorn 10 eine topfförmige Aufnahme 12 ausbilden. Darüber hinaus kann durch Andrücken des Freigabeelementkopfes 5 an die topfförmige Aufnahme 12 zwischen der topfförmigen Aufnahme 12 und dem Freigabeelementkopf 5 ein Reibschluss forciert werden, wodurch eine Drehmomentbeaufschlagung ermöglicht wird. Dies kann beispielsweise zum Eindrehen einer Verbindungsschraube in ein nicht dargestelltes Gewinde des freizugebenden Elementes 2 genutzt werden.

Ein besonders sicheres Abschirmen des Freigabewegs kann erzielt werden, wenn das Separationselement 7 eine Separationskappe ausbildet. Wie in Fig. 1 zu sehen ist, kann die Separationskappe das freizugebende Element 2 in Rückhaltestellung abschnittsweise berührungslos umhüllen. Wird nun das Spannelement 6 gelockert, so treibt die federgestützte Separationskappe die Rückhalteelemente 3 auseinander, ohne dabei das freizugebende Element 2 zu berühren und dessen Bewegung auf negative Weise zu beeinflussen. In Freigabestellung umhüllt die Separationskappe den Freigabeweg, also jenen freizuhaltenden Weg, über den das freizugebende Element 2 die Vorrichtung verlässt, wodurch dieser von etwaigen losen Komponenten abgeschirmt ist und eine Blockierung verhindert werden kann. Die Separationskappe ist vorzugsweise aus einem korrosionsbeständigen, leicht zerspanbaren Material gefertigt.

Damit eine Kerbwirkung zwischen der Separationskappe und den Rückhalteelementen 3 verhindert werden kann, weist der Randabschnitt 13 der Separationskappe eine angefaste Fläche auf, welche zu den Gleitflächen 8 der Rückhalteelemente 3 korrespondierend ausgebildet sein kann. Befindet sich die Separationskappe im Anschlag (Fig. 2), so befindet sich die angefaste Fläche des Randabschnittes 13 der Separationskappe unterhalb der Gleitflächen 8 der Rückhalteelemente 3, wodurch ein Zurückkippen dieser in Richtung des Freigabewegs besonders effektiv verhindert werden kann.

Die erfindungsgemäße Vorrichtung kann als kompakte Baueinheit verbaut werden, wenn die Rückhalteelemente 3, das Spannelement 6, das Separationselement 7 und der Führungsdorn 10 von einem Gehäuse 14 umhüllt sind. Das Gehäuse 14 kann eine Bodenplatte 15 aufweisen. Wie der Fig. 2 zu entnehmen ist, kann der Durchmesser des Gehäuses 14 größer als der Durchmesser des gelockerten Spannelementes 6 sein, um eine störungsfreie Lockerung des Spannelementes 6 zu ermöglichen.

Im Gehäuse 14, nämlich in der Bodenplatte 15 des Gehäuses 14, ist eine fernsteuerbare Auslösevorrichtung 16, nämlich ein fernsteuerbarer Hebel, angeordnet, der lösbar mit einem Endabschnitt 17 des Spannelementes 6 verbunden ist. Dadurch kann auch die Auslösevorrichtung vom Gehäuse 14 geschützt werden und als kompakte Baueinheit verbaut werden. Zur Spannung des Spannelementes 6 und daher zur Fixierung der Rückhalteelemente 3 in Rückhaltestellung wird ein erster Endabschnitt des Spannelementes 6 mit einem Rückhalteelement 3 verbunden (nicht dargestellt), wonach das so befestigte Spannelement 6 unter Spannung um die Rückhalteelemente 3 gewickelt und anschließend dessen Endabschnitt 17 an der Auslösevorrichtung 16 lösbar fixiert wird. Wird die Auslösevorrichtung 16 kommandiert betätigt, versinkt diese in der Bodenplatte 15, wodurch sich der Endabschnitt 17 von der Auslösevorrichtung 16 löst und sich das Spannelement 6 lockert (Fig. 2). Dadurch wird erst eine Verlagerung der Rückhalteelemente 3 in Freigabestellung ermöglicht.

Besonders günstige konstruktive Bedingungen ergeben sich, wenn der Führungsdorn 10 fest mit der Deckseite des Gehäuses 14 verbunden ist, wobei das federbelastete Separationselement 7 verschiebbar am Führungsdorn 10 zwischen dessen Anschlagfläche 11 und der Deckseite des Gehäuses 14 angeordnet ist.

## Patentansprüche

1. Vorrichtung zum Zurückhalten und zum kommandierten Freigeben eines in Freigaberichtung (1) freizugebenden Elementes (2) mit wenigstens zwei zwischen einer Rückhaltestellung und einer Freigabestellung verlagerbaren Rückhalteelementen (3), wobei die Rückhalteelemente (3) von einem diese umwickelnden Spannelement (6) in Rückhaltestellung gehalten werden, wobei ein mit einer Kraft beaufschlagtes Separationselement (7) in Freigaberichtung gegen die Rückhalteelemente (3), zum aktiven Auseinandertreiben der Rückhalteelemente (3) quer zur Freiaberichtung 1 angestellt ist, wobei das Separationselement (7) auf einem koaxial zur Freigaberichtung (1) gelagerten Führungsdorn (10) verschiebbar angeordnet ist und wobei der Führungsdorn (10) eine Anschlagfläche (11) zum Zurückhalten des Separationselementes (7) in Freigabestellung aufweist.

2. Vorrichtung nach Anspruch 1, **dadurch gekennzeichnet, dass** der Führungsdorn (10) eine topfförmige Aufnahme (12) zum wenigstens abschnittsweisen Umgreifen der Kopfseite des freizugebenden Elementes (2) umfasst.

3. Vorrichtung nach Anspruch 1 oder 2, **dadurch gekennzeichnet, dass** das Separationselement (7) eine Separationskappe ist, welche das freizugebende Element (2) in Rückhaltestellung abschnittsweise berührungslos umhüllt.

4. Vorrichtung nach Anspruch 3, **dadurch gekennzeichnet, dass** der Randabschnitt (13) der Separationskappe eine angefaste Fläche aufweist.

5. Vorrichtung nach einem der Ansprüche 1 bis 4, **dadurch gekennzeichnet, dass** die Rückhalteelemente (3), das Spannelement (6) und das Separationselement (7) von einem Gehäuse (14) umhüllt sind.

6. Vorrichtung nach Anspruch 5, **dadurch gekennzeichnet, dass** ein Endabschnitt (17) des Spannelementes (6) lösbar mit einer im Gehäuse (14) angeordneten Auslösevorrichtung (16) verbunden ist.

7. Vorrichtung nach Anspruch 5 oder 6, **dadurch gekennzeichnet, dass** der Führungsdorn (10) fest mit der Deckseite des Gehäuses (14) verbunden ist, wobei das federbelastete Separationselement (7) verschiebbar am Führungsdorn (10) zwischen dessen Anschlagfläche (11) und der Deckseite des Gehäuses (14) angeordnet ist.

8. Freizugebendes Element (2) zum Zurückhalten und zum kommandierten Freigeben in Freigaberichtung (1) mit einem gegenüber einem Freigabeelementhals (4) erweiterten Freigabeelementkopf (5) und mit einer Vorrichtung nach einem der Ansprüche 1 bis 7, **dadurch gekennzeichnet, dass** der von den Rückhalteelementen (3) gegriffene Abschnitt des Freigabeelementkopfes (5) einen Gleitfilm aufweist.

## Claims

1. Device for retaining and for the commanded release of an element (2) to be released in a release direction (1), the device having at least two retaining elements (3) which can be displaced between a retaining position and a release position, the retaining elements (3) being held in the retaining position by a tensioning element (6) which wraps around them, wherein a separating element (7) which is acted upon by a force is set against the retaining elements (3) in the release direction in order to actively drive the retaining elements (3) apart transversely with respect to the release direction (1), wherein the separating element (7) is arranged displaceably on a guide mandrel (10) mounted coaxially to the release direction (1) and wherein the guide mandrel (10) has a stop surface (11) for retaining the separating element (7) in the release position.

2. Device according to claim 1, **characterized in that** the guide mandrel (10) comprises a cup-shaped receptacle (12) for gripping at least in sections around the head side of the element (2) to be released.

3. Device according to claim 1 or 2, **characterized in that** the separating element (7) is a separating cap which envelops the element (2) to be released in the retaining position in sections without contact.

4. Device according to claim 3, **characterized in that** the edge section (13) of the separation cap has a chamfered surface.

5. Device according to one of claims 1 to 4, **characterized in that** the retaining elements (3), the tensioning element (6) and the separating element (7) are enclosed by a housing (14).

6. Device according to claim 5, **characterized in that** an end section (17) of the tensioning element (6) is detachably connected to a release device (16) arranged in the housing (14).

7. Device according to claim 5 or 6, **characterized in that** the guide mandrel (10) is firmly connected to the cover side of the housing (14), the spring-loaded separating element (7) being arranged displaceably on the guide mandrel (10) between its stop surface (11) and the cover side of the housing (14).

8. Element (2) to be released for retaining and for commanded release in the release direction (1), having a release element head (5) which is extended with respect to a release element neck (4), and having a device according to one of claims 1 to 7, **characterized in that** the section of the release element head (5) gripped by the retaining elements (3) has a sliding film.

## Revendications

1. Dispositif pour retenir et pour libérer sur commande un élément à libérer (2) dans une direction de libération (1), avec au moins deux éléments de retenue (3) pouvant se déplacer entre une position de retenue et une position de libération, ces éléments de retenue (3) étant maintenus en position de retenue par un élément de serrage (6) les entourant, un élément de séparation (7) soumis à une force étant incliné dans la direction de libération opposée aux éléments de retenue (3) pour écarter de façon active les éléments de retenue (3) perpendiculairement à la direction de libération (1), l'élément de séparation (7) étant disposé de façon coulissante sur une broche de guidage (10) montée coaxialement à la direction de libération et cette broche de guidage (10) présentant une surface de butée (11) pour retenir l'élément de séparation (7) en position de libération.

2. Dispositif selon la revendication 1, **caractérisé en ce que** la broche de guidage (10) comprend un réceptacle de forme de pot (12) pour entourer au moins partiellement la tête de l'élément à libérer (2).

3. Dispositif selon une la revendication 1 ou 2, **caractérisé en ce que** l'élément de séparation (7) est un capuchon de séparation qui entoure partiellement sans le toucher l'élément à libérer (2) en position de retenue.

4. Dispositif selon la revendication 3, **caractérisé en ce que** la partie périphérique (13) du capuchon de séparation présente une surface chanfreinée.

5. Dispositif selon une des revendications 1 à 4, **caractérisé en ce que** les éléments de retenue (3), l'élément de serrage (6) et l'élément de séparation (7) sont entourés par un boîtier (14).

6. Dispositif selon la revendication 5, **caractérisé en ce qu'**une section d'extrémité (17) de l'élément de serrage (6) est reliée de façon amovible avec un dispositif de déclenchement (16) disposé dans le boîtier (14).

7. Dispositif selon la revendication 5 ou 6, **caractérisé en ce que** la broche de guidage (10) est fixée à la face de recouvrement du boîtier (14), l'élément de séparation à ressort (7) étant disposé de façon coulissante sur la broche de guidage (10) entre sa surface de butée (11) et le côté de recouvrement du boîtier (14).

8. Elément à libérer (2) devant être retenu et libéré sur commande dans une direction de libération (1) avec une tête d'élément de libération (5) élargie par rapport à un col d'élément de libération (4) et avec un dispositif selon une des revendications 1 à 7, **caractérisé en ce que** la section de la tête d'élément de libération (5) agrippée par les éléments de retenue (3) possède un film lubrifiant.
